# EUROPÄISCHE PATENTANMELDUNG

(11) **EP 1 953 450 A1**
(43) Veröffentlichungstag der Anmeldung: **06.08.2008**
(21) Anmeldenummer: 08155095.6
(22) Anmeldetag: 21.06.2006
(51) Int. Cl.: F21S 8/10, G02B 6/00, F21V 14/02, F21V 14/06

(54) **Beleuchtungsvorrichtung für ein Fahrzeug**

(30) Priorität: 01.08.2005 DE 102005036018
(62) Teilanmeldung aus: 06012698.4
(71) Anmelder: Volkswagen AG, 38440 Wolfsburg (DE)
(72) Erfinder: Werner, Michael, 38104, Braunschweig (DE); Müller, Michael, 38518, Gifhorn (DE)
(74) Vertreter: Reitstötter - Kinzebach

(57) **Zusammenfassung**

Die vorliegende Erfindung betrifft eine Beleuchtungsvorrichtung für ein Fahrzeug mit einer Lichtquelle (2) und einem lichtleitenden Element (11), das eine Lichteinkoppelfläche (13) zum Einkoppeln zumindest eines Teils der Lichtemission der Lichtquelle (2) und eine Lichtauskoppelfläche (16) aufweist, wobei das lichtleitende Element (11) drehbar gelagert ist. Die erfindungsgemäße Beleuchtungsvorrichtung ist dadurch gekennzeichnet, dass die Drehachse (R) parallel zur Fahrtrichtung des Fahrzeugs angeordnet ist.

## Beschreibung

Die vorliegende Erfindung betrifft allgemein Beleuchtungsvorrichtungen für ein Fahrzeug mit einem lichtleitenden Element. Die Erfindung betrifft insbesondere eine Beleuchtungsvorrichtung mit zumindest zwei Lichtquellen, denen verschiedene Lichtfunktionen zugeordnet sind. Ferner betrifft die Erfindung eine Beleuchtungsvorrichtung für ein Fahrzeug mit einer Lichtquelle und einem lichtleitenden Element, das eine Lichteinkoppelfläche zum Einkoppeln zumindest eines Teils der Lichtemission der Lichtquelle und eine Lichtauskoppelfläche aufweist. Unter einer Beleuchtungsvorrichtung wird hier jede lichttechnische Einrichtung eines Fahrzeugs verstanden, insbesondere eine Heckleuchte und ein Scheinwerfer.

Wegen des starken Einflusses des Fahrzeugdesigns auf das Image eines Kraftfahrzeugs, unterliegen die Beleuchtungsvorrichtungen eines Fahrzeugs immer stärker den Einflüssen des Designs. Bei der Neugestaltung von Fahrzeugen ergibt sich aus diesen Gründen das Problem, dass der Bauraum, welcher für die Beleuchtungsvorrichtungen bereitgestellt wird, begrenzt ist und bevorzugt so klein wie möglich sein sollte.

Bei Heckleuchten und Scheinwerfern ergibt sich zudem das Problem, dass in einem Beleuchtungsmodul mehrere Lichtfunktionen untergebracht werden müssen. Um alle erforderlichen Lichtfunktionen bereitstellen zu können und gleichzeitig den benötigten Bauraum so gering wie möglich und außerdem eine hohe Flexibilität bei der geometrischen Gestaltung der Beleuchtungsvorrichtungen zu erhalten, wurde der Einsatz von lichtleitenden Elementen vorgeschlagen.

Es ist die Aufgabe der vorliegenden Erfindung, Beleuchtungsvorrichtungen der eingangs genannten Art vorzuschlagen, die einen geringen Bauraumbedarf aufweisen und mit denen ggf. zumindest zwei Lichtfunktionen platzsparend realisiert werden können.

Diese Aufgabe wird durch eine Beleuchtungsvorrichtung mit den Merkmalen des Anspruchs 1 gelöst. Vorteilhafte Aus- und Weiterbildungen ergeben sich aus den Unteransprüchen.

Die erfindungsgemäße Beleuchtungsvorrichtung gemäß einem ersten Ausführungsbeispiel ist gekennzeichnet durch eine lichtleitendes Element mit zwei separaten Lichteinkoppelflächen zum Einkoppeln der Lichtemission der ersten Lichtquelle in die erste Lichteinkoppelfläche und zum Einkoppeln der Lichtemission der zweiten Lichtquelle in die zweite Lichteinkoppelfläche. Vorteilhaft an der Verwendung des lichtleitenden Elements in Verbindung mit den beiden Lichtquellen ist, dass die beiden den Lichtquellen zugeordneten Lichtfunktionen sehr platzsparend realisiert werden können. Der optische Weg des von den Lichtquellen emittierten Lichts kann in dem lichtleitenden Element sehr flexibel angepasst werden, ohne dass separate Linsen und Reflektorelemente vorgesehen werden müssen. Außerdem besitzt die Verwendung des lichtleitenden Elements aus gestalterischer Sicht den Vorteil, dass dieses als Hauptgestaltungsmerkmal der Beleuchtungsvorrichtung eingesetzt werden kann und die Lichtquellen und deren Reflektoren gestalterisch in den Hintergrund treten.

Durch das lichtleitende Element der erfindungsgemäßen Beleuchtungsvorrichtung kann eine Doppel- oder Mehrfachfunktion realisiert werden. Hierbei können auch je nach Funktionsbedarf zwei oder mehr separate Lichteinkoppelflächen vorgesehen sein. Das lichtleitende Element dient als Abstrahlfläche für zwei oder mehrere Lichtfunktionen. Dabei ergeben sich neue gestalterische Möglichkeiten, sehr platzsparend zwei oder mehrere Lichtfunktionen zu realisieren.

Gemäß einer bevorzugten Ausgestaltung der erfindungsgemäßen Beleuchtungsvorrichtung ist zwischen den beiden Lichteinkoppelflächen ein Spalt zur Trennung des über die jeweiligen Lichteinkoppelflächen eingekoppelten Lichts ausgebildet. Dieser Spalt erstreckt sich insbesondere im Wesentlichen parallel zu der Lichtemissionsrichtung der Beleuchtungsvorrichtung in das lichtleitende Element hinein. Die Tiefe und Dicke des Spaltes sollte insbesondere so gewählt werden, dass das in das lichtleitende Element für verschiedene Lichtfunktionen eingekoppelte Licht lichttechnisch gegeneinander abgegrenzt wird. Ferner können auch Gehäuseteile, insbesondere Reflektorteile, in den Spalt eingreifen, um die den beiden Lichtquellen zugeordneten Lichtfunktionen lichttechnisch gegeneinander abzugrenzen.

Bei dem lichtleitenden Element handelt es sich insbesondere um einen dreidimensionalen Lichtbaustein. Das lichtleitende Element ist also kein herkömmlicher langgestreckter Lichtleiter, mit dem Licht von einem Ort zu einem anderen Ort geleitet werden soll. Es handelt sich auch nicht um ein herkömmliches Linsenelement, welches beispielsweise bei einem Projektionsscheinwerfer ein paralleles Lichtbündel erzeugen soll. Der dreidimensionale Lichtbaustein erzeugt zwar auch verschiedene Abstrahlcharakteristiken für die Lichtfunktionen, er schafft jedoch zusätzlich die Möglichkeit, neue Designformen zu gestalten.

Gemäß einer weiteren Ausgestaltung der erfindungsgemäßen Beleuchtungsvorrichtung ist das lichtleitende Element als Zwischenscheibe oder Außenscheibe für die Lichtemission der ersten Lichtquelle angeordnet. Das lichtleitende Element kann sich außerdem netzartig in die Abstrahlfläche der zweiten Lichtquelle erstrecken.

Gemäß einer weiteren Ausgestaltung tritt das von der zweiten Lichtquelle emittierte Licht ohne wesentliche Ablenkung der Abstrahlrichtung durch das lichtleitende Element hindurch. In diesem Fall wird das von der ersten Lichtquelle emittierte Licht im lichtleitenden Element in den Bereich geleitet, in dem das von der zweiten Lichtquelle emittierte Lichte durch das lichtleitende Element durchtritt. Das lichtleitende Element kann auf diese Weise bewirken, dass im Abstrahlbereich der zweiten Lichtquelle Licht der ersten Lichtquelle abgestrahlt wird. Aus gestalterischer Sicht bewirkt das lichtleitende Element in diesem Fall außerdem, dass die zweite Lichtquelle, falls überhaupt, nur durch das lichtleitende Element von außen sichtbar ist. Gemäß einer weiteren Ausgestaltung steht die Auskoppelfläche des lichtleitenden Elements in direktem Kontakt mit der Innenfläche der Außenscheibe.

Zwischen einer Lichtquelle und deren Lichtauskoppelfläche aus dem lichtleitenden Element kann beispielsweise zumindest ein Farbfilter angeordnet sein. Beispielsweise ist der Farbfilter auf der Lichteinkoppelfläche angeordnet. Derartige Farbfilter sind erforderlich, wenn das für eine bestimmte Lichtfunktion abgestrahlte Licht eine entsprechende Farbe aufweisen soll.

Die Auskoppelflächen der Lichtfunktionen können entweder vollständig oder zum Teil überlappen oder die Auskoppelflächen der Lichtfunktionen sind disjunkt.

Die erfindungsgemäße Beleuchtungsvorrichtung gemäß einem zweiten Ausführungsbeispiel ist dadurch gekennzeichnet, dass das lichtleitende Element drehbar gelagert ist. Eine Drehung des lichtleitenden Elements bei eingeschalteter Beleuchtungsvorrichtung hat somit den Effekt, dass die Abstrahlfläche des lichtleitenden Elements wesentlich vergrößert werden kann, da von außen als Abstrahlfläche die Rotationsfläche des lichtleitenden Elements erscheint. Die Beleuchtungsvorrichtung kann somit auch in Verbindung mit einer weiteren Lichtquelle eingesetzt werden, die Licht durch die nicht abgedeckten Bereiche des lichtleitenden Elements abstrahlen kann. Der Bauraumbedarf der erfindungsgemäßen Beleuchtungsvorrichtung kann auf diese Weise verringert werden.

Vorzugsweise ist eine Antriebsvorrichtung vorgesehen, welche das lichtleitende Element zumindest bei einer Lichtemission der Lichtquelle dreht. Die Lichtauskoppelfläche liegt zumindest zum Teil außerhalb der Drehachse und ist außerdem nicht rotationssymmetrisch zur Drehachse. Diese Anordnung hat bei einer Drehung des lichtleitenden Elements die Vergrößerung der Lichtauskoppelfläche zur Folge.

Insbesondere wenn es sich bei der Beleuchtungsvorrichtung um einen Fahrzeugscheinwerfer oder eine Fahrzeugleuchte handelt, ist die Drehachse im Wesentlichen parallel zur Fahrtrichtung des Fahrzeugs angeordnet. Gemäß einer anderen Ausgestaltung kann die Drehachse jedoch auch in einer zur Fahrtrichtung senkrechten Ebene liegen. In diesem Fall können auch eckige Abstrahlflächen durch die Rotation des lichtleitenden Elements erzeugt werden.

Das lichtleitende Element kann entweder gemeinsam mit der Lichtquelle drehbar gelagert sein oder die Lichtquelle ist nicht drehbar gelagert und die Lichteinkoppelfläche ist so angeordnet, dass bei einer Drehung des lichtleitenden Elements fortwährend Licht über die Lichteinkoppelfläche einkoppelbar ist.

Die Erfindung wird nun anhand von Ausführungsbeispielen mit Bezug zu den Zeichnungen erläutert.
- Fig. 1: zeigt die Lichtquellen und das lichtleitende Element gemäß einem ersten Ausführungsbeispiel der erfindungsgemäßen Beleuchtungsvorrichtung,
- Fig. 2: zeigt die Lichtquellen und das lichtleitende Element gemäß einer Weiterbildung des ersten Ausführungsbeispiels der erfindungsgemäßen Beleuchtungsvorrichtung,
- Fig.3: zeigt schematisch einen Querschnitt einer Weiterbildung des ersten Ausführungsbeispiels der erfindungsgemäßen Beleuchtungsvorrichtung,
- Fig.4a: zeigt schematisch eine weitere Ausgestaltung des ersten Ausführungsbeispiels im Querschnitt und die
- Fig. 4b, 4c und 4d: zeigen spezielle Ausgestaltungen des lichtleitenden Elements in einer Ansicht von außen,
- Fig. 5: zeigt eine weitere Ausgestaltung der erfindungsgemäßen Beleuchtungsvorrichtung im Querschnitt,
- Fig. 6a: zeigt schematisch einen Querschnitt durch eine weitere Ausgestaltung der erfindungsgemäßen Beleuchtungsvorrichtung und Fig. 6b die Anordnung der Lichtquellen in einer Ansicht entgegen der Lichtemissionsrichtung,
- Fig. 7a: zeigt schematisch einen Querschnitt durch eine weitere Ausgestaltung der erfindungsgemäßen Beleuchtungsvorrichtung und Fig. 7b die Anordnung der Lichtquellen in einer Ansicht entgegen der Lichtemissionsrichtung,
- die Fig. 8a, 8b und 8c: zeigen weitere Gestaltungsmöglichkeiten des lichtleitenden Elements 3 (oben) und das Erscheinungsbild der Abstrahlflächen dieser Elemente (unten) und Fig. 8d zeigt noch eine weitere Gestaltungsmöglichkeit des lichtleitenden Elements 3 im Querschnitt,
- Fig. 9: zeigt einen Querschnitt durch ein zweites Ausführungsbeispiel der erfindungsgemäßen Beleuchtungsvorrichtung, bei welcher das lichtleitende Element drehbar gelagert ist,
- Fig. 10a: zeigt schematisch einen Querschnitt durch eine weitere Ausgestaltung des zweiten Ausführungsbeispiels der erfindungsgemäßen Beleuchtungsvorrichtung mit einem drehbar gelagerten lichtleitenden Element und Fig. 10b eine perspektivische Ansicht davon und
- Fig. 10c: zeigt schematisch einen Querschnitt durch eine weitere Ausgestaltung des zweiten Ausführungsbeispiels der erfindungsgemäßen Beleuchtungsvorrichtung mit einem drehbar gelagerten lichtleitenden Element.

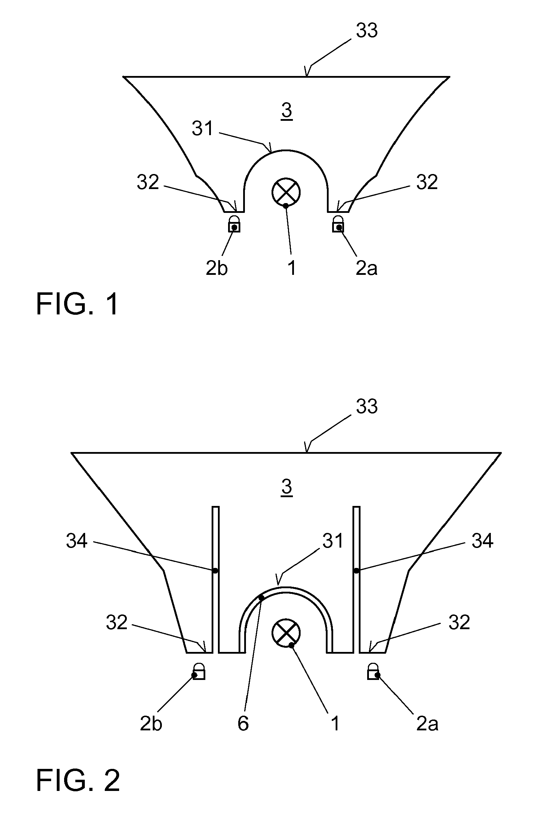

In Fig. 1 ist ein Beispiel für das lichtleitende Element 3 und die Anordnung der Lichtquellen 1, 2a und 2b gezeigt. Bei dem lichtleitenden Element 3 handelt es sich um einen dreidimensionalen Lichtbaustein. Er weist zwei Lichteinkoppelflächen 31 und 32 auf. Die erste Lichteinkoppelfläche 31 ist halbkugelförmig und umschließt die erste Lichtquelle 1.

Die zweite Lichteinkoppelfläche 32 ist ringförmig und umgibt die Halbkugel der Lichteinkoppelfläche 31. Vor dem Ring der Lichteinkoppelfläche 32 können mehrere Lichtquellen angeordnet sein, welche einer anderen Lichtfunktion zugeordnet sind, als die erste Lichtquelle 1. In Fig. 1 sind die gegenüberliegenden Lichtquellen 2a und 2b gezeigt.

Das von der ersten Lichtquelle 1 emittierte Licht wird über die Lichteinkoppelfläche 31 in den Lichtbaustein 3 eingekoppelt und in diesem zur Lichtauskoppelfläche 33 geleitet. Dort wird es ausgekoppelt und dann ggf. über eine transparente Abdeckscheibe nach außen abgestrahlt. Durch die erste Lichtquelle 1 kann beispielsweise eine der Lichtfunktionen einer Heckleuchte, z. B. das Schlusslicht, realisiert werden. Bei der ersten Lichtquelle 1 kann es sich beispielsweise um eine herkömmliche Glühbirne oder Halogenbirne handeln. Andere Lichtquellen sind jedoch auch einsetzbar.

Das von den zweiten Lichtquellen 2 emittierte Licht wird über die als Ring ausgestaltete zweite Lichteinkoppelfläche 32 in den Lichtbaustein 3 eingekoppelt, in dem Lichtbaustein 3 weitergeleitet und bei der Lichtauskoppelfläche 33 ausgekoppelt. Durch die zweiten Lichtquellen 2 kann beispielsweise bei einer Heckleuchte das Bremslicht realisiert werden, welches in diesem Fall das von der ersten Lichtquelle 1 realisierte Schlusslicht in der gleichen Lichtauskoppelfläche 33 überstrahlt. Die zweite Lichtquelle 2a bzw. 2b können z. B. von lichtemittierenden Dioden (LEDs) gebildet sein.

Fig. 2 zeigt eine Weiterbildung des in Fig. 1 gezeigten Lichtbausteins. Der äußere Ring der zweiten Lichteinkoppelfläche 32 ist hier durch einen zylindrischen Spalt 34 von der ersten Lichteinkoppelfläche 31 getrennt. Der Spalt 34 erstreckt sich parallel zur Fahrtrichtung, d.h. in Lichtemissionsrichtung, in den Lichtbaustein 3 so weit hinein, dass die von den Lichtquellen 1 und 2 realisierten Lichtfunktionen optisch voneinander getrennt werden. Die den zweiten Lichtquellen 2 zugeordnete Lichtfunktion wird in diesem Fall überwiegend bzw. ausschließlich im äußeren Randbereich der Abstrahlfläche 33 abgestrahlt, die der ersten Lichtquelle 1 zugeordnete Lichtfunktion wird überwiegend bzw. ausschließlich in der Mitte der Abstrahlfläche 33 abgestrahlt. Um eine sichere Trennung der Lichtfunktionen zu erreichen, ist es außerdem möglich, dass Gehäuse oder Reflektorteile in den Spalt 34 eingreifen.

Zudem ist bei dem in Fig. 2 gezeigten Beispiel auf der ersten Lichteinkoppelfläche 31 ein Farbfilter 6, z. B. ein Rotfilter oder ein Gelbfilter, vorgesehen. Der Farbfilter 6 kann dem von der ersten Lichtquelle 1 emittierten Licht die für eine bestimmte Lichtfunktion erforderliche Farbe verleihen.

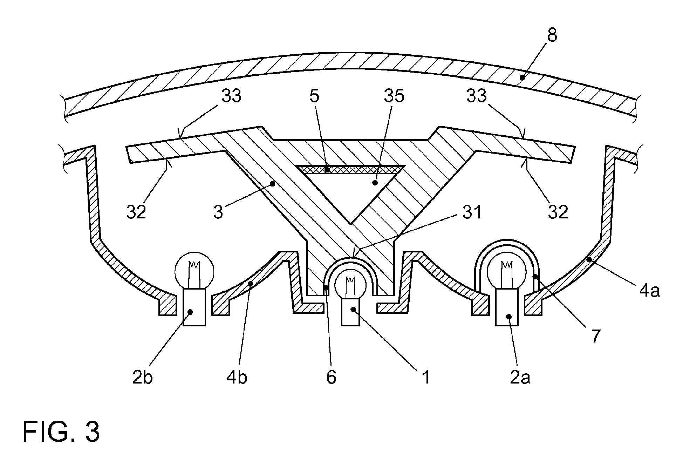

Fig. 3 zeigt ein Beispiel eines Heckleuchtenmoduls für ein Fahrzeug. Der Lichtbaustein 3 ist in diesem Fall ähnlich wie in den zuvor beschriebenen Gestaltungen zu der ersten Lichtquelle 1 angeordnet. Auf der Lichteinkoppelfläche 31 ist ein Farbfilter 6 aufgebracht, über welchen des Licht der ersten Lichtquelle 1 in den Lichtbaustein 3 eingekoppelt wird. Im Inneren weist der Lichtbaustein 3 eine kegelförmige Aussparung 35 auf, wobei die Kegelspitze in Richtung der ersten Lichtquelle 1 zeigt. Die Grundfläche der kegelförmigen Aussparung 35 kann wahlweise von einem Abschatter 5 abgedeckt sein. Das von der ersten Lichtquelle 1 eingekoppelte Licht wird dann überwiegend über die Außenbereiche der Lichtauskoppelfläche 33 ausgekoppelt.

Die in Fig. 3 gezeigte Ausgestaltung unterscheidet sich von den zuvor beschriebenen Ausgestaltungen in der Form des Lichtbausteins 3 im Bereich der zweiten Lichtquellen. Neben der ersten Lichtquelle 1 sind zwei herkömmliche Leuchteinheiten mit den Lichtquellen 2a und 2b vorgesehen. Die Lichtquelle 2a ist von dem Reflektor 4a umgeben, die Lichtquelle 2b von dem Reflektor 4b. Ferner ist die Lichtquelle 2a von einer Filterkappe 7 umgeben, um beispielsweise das orange Licht für den Fahrtrichtungsanzeiger zu erzeugen. Das von Lichtquellen 2a und 2b emittierte Licht durchtritt die äußeren Bereiche des Lichtbausteins 3 ohne wesentliche Ablenkung der Abstrahlrichtung. Es tritt bei der Lichteinkoppelfläche 32 ein und bei der parallel dazu verlaufenden Lichtauskoppelfläche 33 aus.

Die gesamte Anordnung wird von der Abschlussscheibe 8 abgedeckt, welche ggf. weitere Filterelemente aufweisen. Gemäß einer Abwandlung des in Fig. 3 gezeigten Beispiels ist der Abschatter 5 nicht vorgesehen oder es werden nur Teilbereiche der Grundfläche der kegelförmigen Aussparung 35 abgeschattet. Auch kann der Lichtbaustein 3 insgesamt farbig eingefärbt sein. Ferner kann der Bereich, der in Abstrahlrichtung hinter dem in Fig. 3 gezeigten Abschatter 5 liegt, als Scheibe mit oder ohne Optik ausgebildet sein, wenn der Abschatter 5 nicht vorgesehen ist. Je nach Lichtfunktion kann die Scheibe auch entsprechend eingefärbt sein. Mit der in Fig. 3 gezeigten Beleuchtungsvorrichtung lassen sich beispielsweise folgende Gestaltungen realisieren:

Die Lichtquellen 2a und 2b können ein Schlusslicht bereitstellen. Die Lichtquelle 2b zusätzlich ein Bremslicht. In diesem Fall ist jedoch auch vor der Lichtquelle 2b eine Filterkappe 7 vorgesehen. Die erste Lichtquelle 1 kann in diesem Fall einen oranges Licht abstrahlenden Fahrtrichtungsanzeiger realisieren. Wird in diesem Fall der Abschatter 5 weggelassen, wird das orange Licht des Fahrtrichtungsanzeiger in der Mitte des Lichtbausteins 3 abgestrahlt, das Schlusslicht in den Außenbereichen. Ferner wird das Bremslicht nur auf der Seite der Lichtquelle 2b des Lichtbausteins 3 abgestrahlt. Bei ausgeschalteten Lichtquellen 1, 2a und 2b kann man von außen durch die Abdeckscheibe 8 nur den Lichtbaustein 3 erkennen, der beispielsweise grün eingefärbt ist. Die Lichtquellen sind in diesem Fall nicht sichtbar.

Gemäß einer weiteren Ausgestaltung wird von der ersten Lichtquelle 1 ein Schlusslicht bereitgestellt, von der Lichtquelle 2a das Bremslicht und von der Lichtquelle 2b der Fahrtrichtungsanzeiger. Die Abstrahlfläche des Schlusslichts kann in diesem Fall ringförmig sein. Die Abstrahlfläche des Blinkers wird von dem vor der Lichtquelle 2b vorgesehenen Halbring der Abstrahlfläche 33 und das Bremslicht von dem auf der anderen Seite vorgesehenen Halbring der Abstrahlfläche 33 gebildet.

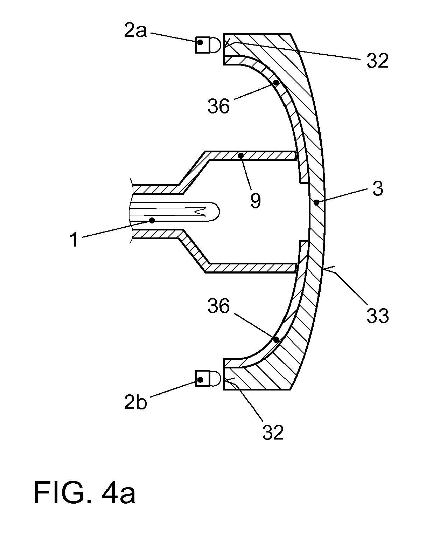

In Fig. 4a ist eine weitere Ausgestaltung des ersten Ausführungsbeispiels der erfindungsgemäßen Beleuchtungsvorrichtung mit einem Rückfahrscheinwerfer und einem Schlusslicht gezeigt. Die erste Lichtquelle ist von einem im Wesentlichen zylindrischen Reflektor 9 umgeben. Der Lichtbaustein 3 ist scheibenförmig und überdeckt den Abschluss des zylindrischen Reflektors 9. In den Außenbereichen ist er nach hinten gebogen und endet in einer ringförmigen Lichteinkoppelfläche 32. Vor diesem Ring sind eine Vielzahl von Lichtquellen 2 angeordnet, von denen in Fig. 4a die Lichtquellen 2a und 2b gezeigt sind. Bei den Lichtquellen 2 handelt es sich insbesondere um Leuchtdioden.

Das von der ersten Lichtquelle 1 emittierte Licht wird im Wesentlichen über den zentralen Bereich des Lichtbausteins 3 abgestrahlt. Hier tritt das Licht im Wesentlichen ungehindert durch den Lichtbaustein 3 hindurch. Das von den Lichtquellen 2 emittierte Licht wird über die Lichteinkoppelfläche 32 in den Lichtbaustein eingekoppelt und dann im Wesentlichen als äußerer Ring ausgekoppelt. Ferner ist auf Innenseite des Lichtbausteins 3 ein Abschatter 36 angebracht, welcher das von der ersten Lichtquelle 1 emittierte Licht in dem Lichtbaustein 3 von dem über die Lichtquellen 2 eingekoppelten Licht trennt.

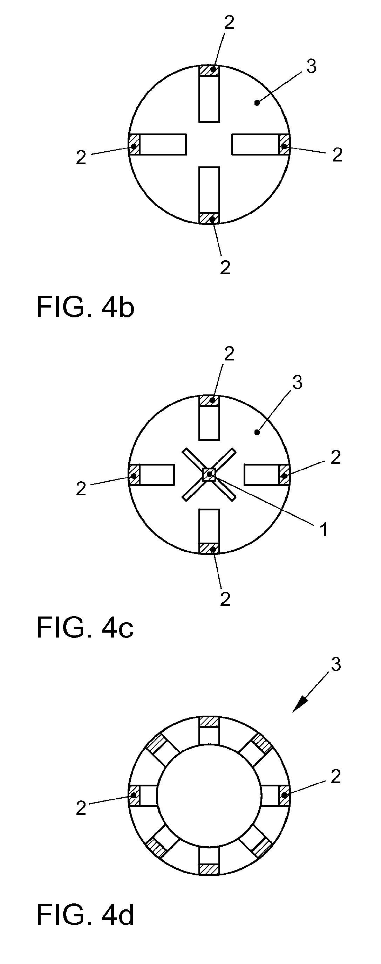

In den Fig. 4b, 4c und 4d sind weitere Ausgestaltungen des Lichtbausteins 3 in einer Ansicht von außen gezeigt. In dem Lichtbaustein 3 ist eine Struktur vorgesehen, welche das von den Lichtquellen eingekoppelte Licht in bestimmten Richtungen in den Lichtbaustein 3 lenkt. Bei dem in Fig. 4b gezeigten Beispiel sind vier Streifen gebildet, welche sich von den außen angeordneten Lichtquellen 2 nach innen erstrecken. Bei dem in Fig. 4c gezeigten Beispiel ist ferner bei der zentralen Lichtquelle 1 in der Mitte ein Kreuz gebildet, so dass das Licht dieser Lichtquelle 1 insbesondere in diesem Kreuz abgestrahlt wird. In dem in Fig. 4d gezeigten Beispiel sind insgesamt acht äußere Lichtquellen 2 vorgesehen, welche einen äußeren Ring in dem Lichtbaustein 3 bilden.

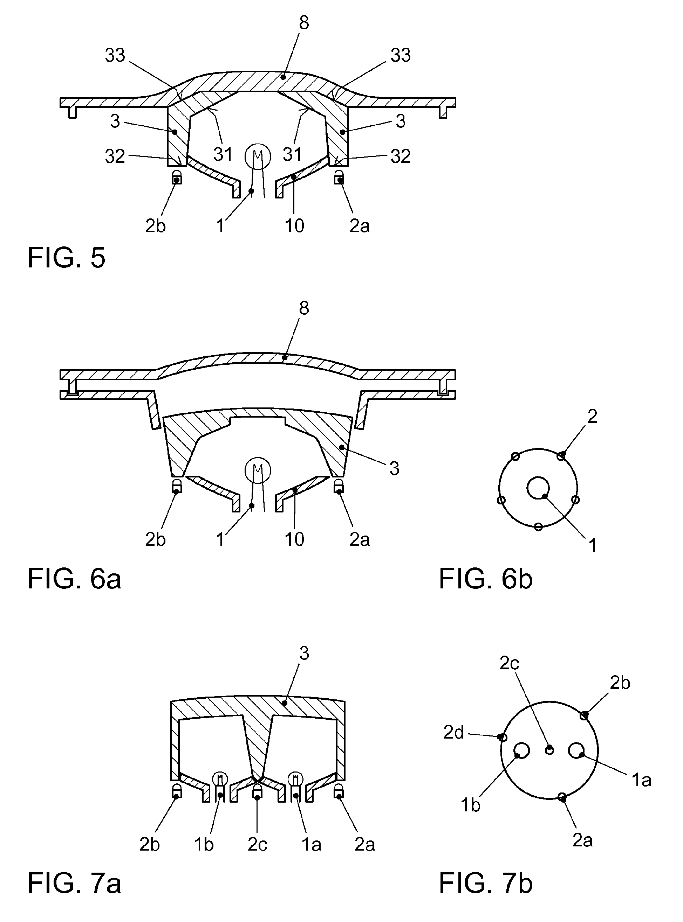

Fig. 5 zeigt im Querschnitt eine weitere Ausgestaltung der Beleuchtungsvorrichtung. Es ist eine erste Lichtquelle 1, die von einem Reflektor 10 umgeben ist, vorgesehen. In Abstrahlrichtung der ersten Lichtquelle 1 ist eine transparente Abschlussscheibe 8 vorgesehen. Es handelt sich hierbei somit um ein an sich bekanntes Leuchtmodul.

Der Reflektor 10 ist außen von einem Lichtbaustein 3 umgeben, der an die Außenkante des Reflektors 10 anschließend eine ringförmige Lichteinkoppelfläche 32 aufweist. Vor dieser Fläche sind mehrere Leuchtdioden angeordnet, von denen in Fig. 5 die Leuchtdioden 2a und 2b gezeigt sind. In Abstrahlrichtung verbreitert sich der Lichtbaustein 3 zur Mitte hin in die Abstrahlrichtung der ersten Lichtquelle 1 hinein. In der Mitte verbleibt jedoch eine scheibenförmige Öffnung. Die Lichtauskoppelfläche 33 des Lichtbausteins 3 steht in direktem Kontakt mit der Innenfläche der Abdeckscheibe 8. Das von den Lichtquellen 2 emittierte Licht wird somit über die ringförmige Lichteinkoppelfläche 32 in den Lichtbaustein 3 eingekoppelt und bei der sehr viel größeren Lichtauskoppelfläche 33 ausgekoppelt. Das von der ersten Lichtquelle 1 emittierte Licht wird zum einen direkt durch die Abdeckscheibe 8 in der Mitte abgestrahlt und zum anderen über die Lichteinkoppelflächen 31 eingekoppelt und auch über die Lichtauskoppelfläche 33 ausgekoppelt. Die Abstrahlflächen der Lichtquelle 1 zum einen und der Lichtquellen 2 zum anderen, überdecken sich somit teilweise.

Die Fig. 6a zeigt im Querschnitt ein weiteres Ausführungsbeispiel der Beleuchtungsvorrichtung, bei welchem der Lichtbaustein 3 als Zwischenscheibe eines Leuchtmoduls mit der ersten Lichtquelle 1 ausgebildet ist. In diese als Lichtbaustein ausgebildete Zwischenscheibe wird, wie mit Bezug zu Fig. 5 erläutert, das Licht der Lichtquellen 2 eingekoppelt. Die Anordnung der Lichtquellen entgegen der Abstrahlrichtung ist dabei in Fig. 6b gezeigt.

In Fig. 7a ist ein weiteres Beispiel einer Beleuchtungsvorrichtung gezeigt. In diesem Fall sind der ersten Lichtfunktion die beiden Lichtquellen 1a und 1b zugeordnet. Der zweiten Lichtfunktion sind mehrere, auf einem äußeren Ring angeordnete Lichtquellen 2a, 2b und 2d sowie eine zentrale Lichtquelle 2c zugeordnet.

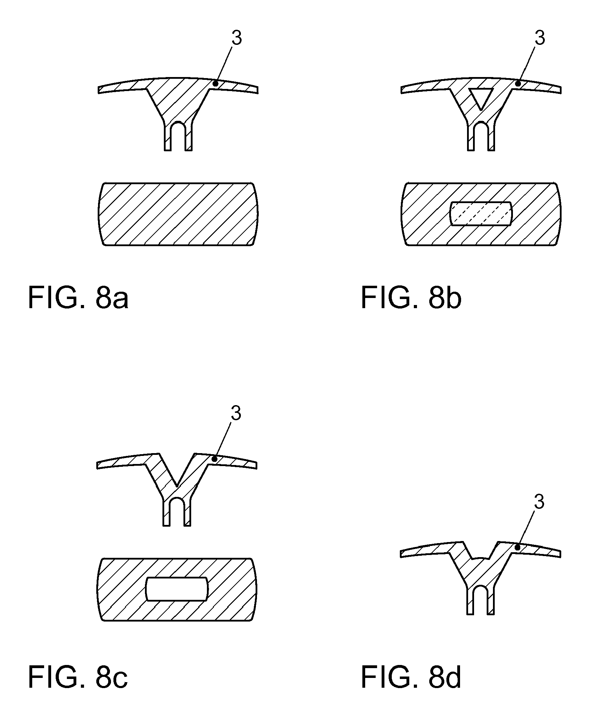

Die Fig. 8a, 8b und 8c zeigen weitere Gestaltungen des Lichtbausteins 3 im Querschnitt, wobei unterhalb dieser Querschnittsdarstellung das Erscheinungsbild der Abstrahlflächen von Beleuchtungsvorrichtungen mit solchen Lichtbausteinen gezeigt ist. Schließlich zeigt Fig. 8d noch eine weitere Gestaltung des Lichtbausteins 3 im Querschnitt.

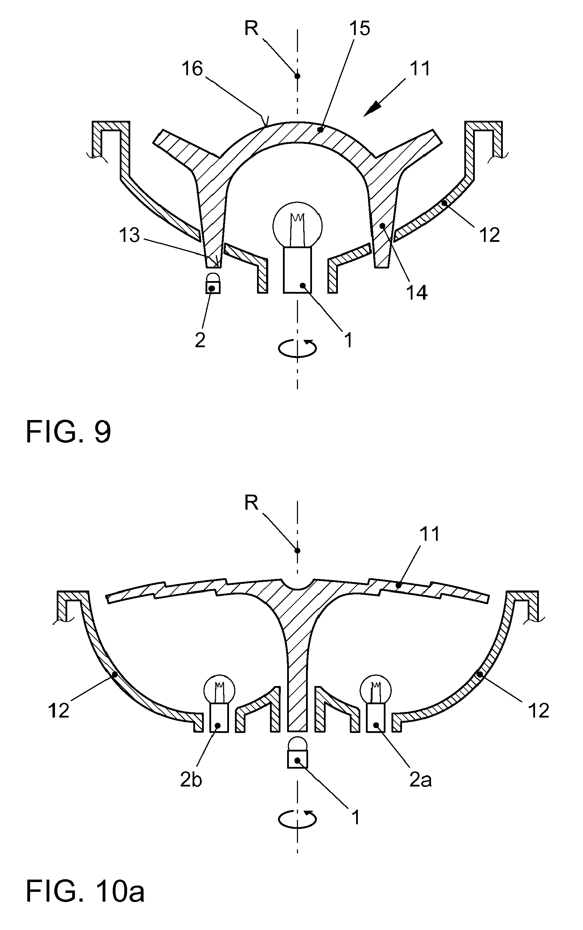

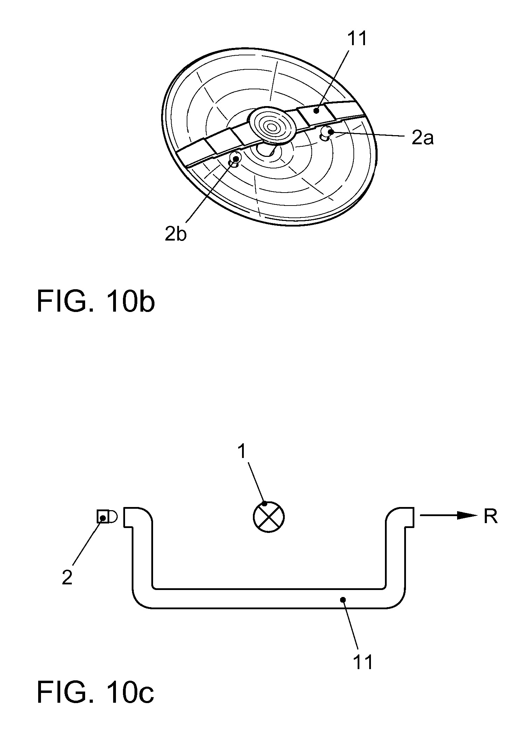

In den Fig. 9 und 10a bzw. 10b sind Ausführungsbeispiele für Beleuchtungsvorrichtungen gezeigt, bei denen das lichtleitende Element 11 drehbar gelagert ist. Bei dem in Fig. 9 gezeigten Beispiel ist eine herkömmliche Leuchtenanordnung mit einer Lichtquelle 1 und einem Reflektor 12 gezeigt. Aus dem Reflektor 12 ist ein Ring ausgeschnitten, durch welchen ein zylindrischer Abschnitt des lichtleitenden Elements 11 hindurchtritt. Die Stirnfläche des zylindrischen Abschnitts 14 des lichtleitenden Elements 11, stellt eine Lichteinkoppelfläche 13 für eine weitere Lichtquelle 2 dar. Die weitere Lichtquelle 2 kann insbesondere eine Leuchtdiode sein. Der zylindrische Abschnitt 14 ist auf der anderen Seite in Abstrahlrichtung der ersten Lichtquelle 1 von einem Steg 15 überspannt. Anstatt des Steges 15 kann auch auf beliebige Weise die von dem zylindrischen Abschnitt 14 gebildete Öffnung für die Lichtemission der ersten Lichtquelle 1 zum Teil überdeckt sein.

Das lichtleitende Element 11 zeichnet sich dadurch aus, dass es drehbar gelagert ist. Es kann um die Drehachse R rotieren, die z. B. parallel zur Fahrtrichtung ausgerichtet ist. Bei einer ausreichend schnellen Rotation des lichtleitenden Elements 11 kann ein Betrachter die Drehung der Abstrahlfläche 16 nicht wahrnehmen. Vielmehr erscheint eine Rotationsfläche, die sich aus der Drehung der Abstrahlfläche 16 ergibt.

Es ist somit möglich, durch die erste Lichtquelle 1 eine erste Lichtfunktion bereitzustellen, welche auf herkömmliche Weise, beispielsweise über eine transparente Abschlussscheibe nach außen abgestrahlt wird. Die Abstrahlfläche ist nur in einem kleinen Bereich von dem Teil 15 des lichtleitenden Elements 11 überdeckt. Hier tritt die von der ersten Lichtquelle 1 emittierte Strahlung durch das lichtleitende Element 11 hindurch. Um eine weitere Lichtfunktion zu realisieren, kann die zweite Lichtquelle 2 eingeschaltet werden. In diesem Fall wird das lichtleitende Element 11 von einem Motor in eine schnelle Drehung versetzt, so dass sich für den Betrachter von außen eine scheibenförmige Abstrahlfläche für diese weitere Lichtfunktion ergibt. Die Abstrahlfläche 16 sollte daher zum Teil außerhalb der Drehachse liegen und zur Drehachse R nicht rotationssymmetrisch sein, da sich nur in diesem Fall die Abstrahlfläche 16, wenn sich das lichtleitende Element 11 nicht dreht, von der scheinbaren Abstrahlfläche bei einer Drehung des lichtleitenden Elements 11 unterscheidet.

Bei dem in Fig. 9 gezeigten Beispiel besteht die Möglichkeit, dass die Leuchtdiode 2 an der Lichteinkoppelfläche 13 des lichtleitenden Elements 11 befestigt ist und sich mit dieser dreht. Es ist in diesem Fall auch nicht erforderlich, dass der Seitenabschnitt 14 des lichtleitenden Elements 11 rotationssymmetrisch ist. Es würde beispielsweise ausreichen, dass das lichtleitende Element 11 die erste Lichtquelle 1 U-förmig umgibt.

In Fig. 10a und 10b ist eine weitere Ausgestaltung einer Beleuchtungsvorrichtung mit einem drehbaren lichtleitenden Element 11 gezeigt. Das lichtleitende Element 11 ist in diesem Fall propellerförmig. Über eine zentrale ortsfeste Leuchtdiode 1 wird in Richtung der Drehachse R Licht in die Drehwelle des lichtleitenden Elements 11 eingekoppelt. Von dort wird das Licht zu den Flügeln des propellerförmigen lichtleitenden Elements 11 nach außen geleitet. Bei einer Drehung des lichtleitenden Elements 11 wird von den Flügeln des propellerförmigen lichtleitenden Elements 11 eine leuchtende Scheibe gebildet. Radial außen von der Welle des propellerförmigen lichtleitenden Elements 11 sind mehrere herkömmliche Lichtquellen angeordnet. In Fig. 10a und 10b sind beispielsweise die Lichtquellen 2a und 2b gezeigt, welche von Reflektoren 12 umgeben sind.

Bei der in den Fig. 10a und 10b gezeigten Ausgestaltung der Beleuchtungsvorrichtung mit einem drehbar gelagerten lichtleitenden Element 11 ist die Drehachse R parallel zur Fahrtrichtung, d.h. bei einem Scheinwerfer in Fahrtrichtung und bei einer Heckleuchte entgegengesetzt zur Fahrtrichtung ausgerichtet. Die Drehachse R kann jedoch auch beliebige andere Ausrichtungen besitzen. Je nach Betrachtungswinkel werden dann andere Abstrahlflächen realisiert. Die Fig. 10c zeigt eine solche Ausgestaltung, bei welcher die Drehachse R in einer Ebene senkrecht zur Fahrtrichtung ausgerichtet ist, insbesondere horizontal oder vertikal ausgerichtet ist. Das von der Leuchtdiode 2 emittierte Licht wird in das um die Achse R drehbar gelagerte lichtleitende Element 11 eingekoppelt und bei den Oberflächen dieses Elements 11 abgestrahlt. Dreht sich das lichtleitende Element 11, erscheint eine im Wesentlichen rechteckige Abstrahlfläche. Ferner kann in der Mitte der Beleuchtungsvorrichtung noch eine weitere Lichtquelle 1 angeordnet sein, welche eine weitere Lichtfunktion realisiert.

Es gibt vielfältige Möglichkeiten für die geometrische Ausbildung des drehbaren lichtleitenden Elements. Beispielsweise kann das lichtleitende Element von einem in Lichtemissionsrichtung ausgerichteten Stab gebildet sein, der außerhalb einer Drehachse angeordnet ist. Die eine Stirnfläche eines solchen Stabes bildet die Lichteinkoppelfläche für eine an dem Stab befestigte Lichtquelle. Die andere Stirnseite bildet die Lichtauskoppelfläche. Bei einer Rotation des Stabes beschreibt dieser eine Kreisbewegung um die Drehachse, so dass bei ausreichend schneller Rotation eine ringförmige Abstrahlfläche für den Betrachter erscheint.

### BEZUGSZEICHENLISTE

- 1: erste Lichtquelle
- 2a: zweite Lichtquelle
- 2b: zweite Lichtquelle
- 3: lichtleitendes Element
- 4a: Reflektor
- 4b: Reflektor
- 5: Abschatter
- 6: Farbfilter
- 7: Filterkappe
- 8: Abschlussscheibe
- 9: zylindrischer Reflektor
- 10: Reflektor
- 11: lichtleitendes Element
- 12: Reflektor
- 13: Lichteinkoppelfläche
- 14: zylindrischer Abschnitt des lichtleitenden Elements 11
- 15: Steg
- 16: Abstrahlfläche
- 31: erste Lichteinkoppelfläche
- 32: zweite Lichteinkoppelfläche
- 33: Lichtauskoppelfläche
- 34: zylindrischer Spalt
- 35: kegelförmige Aussparung
- 36: Abschatter
- R: Drehachse

## Patentansprüche

1. Beleuchtungsvorrichtung für ein Fahrzeug mit einer Lichtquelle (2) und einem lichtleitenden Element (11), das eine Lichteinkoppelfläche (13) zum Einkoppeln zumindest eines Teils der Lichtemission der Lichtquelle (2) und eine Lichtauskoppelfläche (16) aufweist, wobei das lichtleitende Element (11) drehbar gelagert ist,
**dadurch gekennzeichnet,**
**dass** die Drehachse (R) parallel zur Fahrtrichtung des Fahrzeugs angeordnet ist.

2. Beleuchtungsvorrichtung nach Anspruch 1,
**dadurch gekennzeichnet,**
**dass** eine Antriebseinrichtung vorgesehen ist, welche das lichtleitende Element (11) zumindest bei einer Lichtemission der Lichtquelle (2) dreht.

3. Beleuchtungsvorrichtung nach Anspruch 1 oder 2,
**dadurch gekennzeichnet,**
**dass** die Lichtauskoppelfläche (16) zumindest zum Teil außerhalb der Drehachse (R) liegt und nicht rotationssymmetrisch zur Drehachse (R) ist.

4. Beleuchtungsvorrichtung nach einem der Ansprüche 1 bis 3,
**dadurch gekennzeichnet,**
**dass** das lichtleitende Element (11) gemeinsam mit der Lichtquelle (2) drehbar gelagert ist.

5. Beleuchtungsvorrichtung nach einem der Ansprüche 1 bis 3,
**dadurch gekennzeichnet,**
**dass** die Lichtquelle (1) nicht drehbar gelagert ist und dass die Lichteinkoppelfläche (13) zur Lichtquelle (1) so angeordnet ist, dass bei einer Drehung des lichtleitenden Elements (11) fortwährend Licht einkoppelbar ist.

6. Beleuchtungsvorrichtung nach Anspruch 5,
**dadurch gekennzeichnet,**
**dass** das lichtleitende Element (11) propellerförmig ist.

7. Beleuchtungsvorrichtung nach Anspruch 6,
**dadurch gekennzeichnet,**
**dass** über die als zentrale ortsfeste Leuchtdiode ausgebildete Lichtquelle (1) Licht in Richtung der Drehachse (R) in die Drehwelle des lichtleitenden Elements (11) eingekoppelt wird.

8. Beleuchtungsvorrichtung nach Anspruch 7,
**dadurch gekennzeichnet,**
**dass** das Licht von der Drehwelle zu den Flügeln des propellerförmigen lichtleitenden Elements (11) nach außen geleitet wird und bei einer Drehung des lichtleitenden Elements (11) von den Flügeln des propellerförmigen lichtleitenden Elements (11) eine leuchtende Scheibe gebildet wird.
